# EUROPEAN PATENT APPLICATION

(11) **EP 4 693 097 A1**
(43) Date of publication of application: **11.02.2026**
(21) Application number: 24823203.5
(22) Date of filing: 24.05.2024
(51) Int. Cl.: G06K 17/00, G06K 7/10, G06Q 50/04

(54) **LABEL MANAGEMENT SYSTEM, LABEL MANAGEMENT METHOD, AND PROGRAM**

(30) Priority: 14.06.2023 JP 2023097951
(71) Applicant: Osaka Sealing Printing Co., Ltd., Osaka-shi, Osaka 543-0028 (JP)
(72) Inventor: SEZAKI Tsutomu, Osaka-shi, Osaka 543-0028 (JP); SATO Hironori, Osaka-shi, Osaka 543-0028 (JP); OHASHI Daisuke, Osaka-shi, Osaka 543-0028 (JP)
(74) Representative: Knöner, Gregor
(86) International application number: PCT/JP2024/019134
(87) International publication number: WO 2024/257581

(57) **Abstract**

A label management system is a system that allows product management using a label, and comprises a code printing device, an information reading device, and a database. The label includes a print surface printed with a digital watermark that shows label information. The label information is information for individual identification of the label itself. The code printing device prints a code of product information on the print surface of the label. The product information is information for individual identification of a product to which the label is to be attached. The information reading device reads the label information and the product information from the digital watermark and the code respectively printed on the print surface of the label, for the label as a unit. The label information and the product information that are read by the information reading device are stored into the database in association with each other for the label as a unit.

## Description

### Technical Field

The present invention relates to a technique of product management using a label, and a technique of label management allowing the product management.

### Background Art

According to an existing technique allowing product management using a label, a code (such as a bar code or a QR code^{®}) of product information (such as a GTIN) used for individual identification of each product is printed on a label, and the code is read to allow tracing of a product, and others. According to another existing technique, product information is embedded using a digital watermark in a label instead of a code. Patent Literature 1 discloses a technique that uses both of these techniques to print a code of product information on a label and embed the same product information as a digital watermark in the label. By doing so, even if reading of the code is impossible due to warpage or contamination of the label in reading the product information, it still becomes possible to use the digital watermark as an alternative.

### Citation List

### Patent Literature

Patent Literature 1: Japanese published unexamined patent No. 2022-99918

### Summary of Invention

### Technical Problem

A dishonest act such as diversion of a product has been made frequently in recent years. Such a dishonest act is made by cutting out a part where a code (information allowing tracing of a product) is printed in a label while leaving a part of the label where source information about the product (information such as a brand name that upvalues the product)is printed, for the purpose of escaping from the tracing of the product while using the value of the product badly. In response to such a dishonest act, even if the code is cut out, the technique disclosed by Patent Literature 1 still makes it possible to acquire product information from a digital watermark printed on the part left in the label to allow tracing of a product (monitoring of a dishonest act).

However, the following problem occurs in trying to print product information as a digital watermark. In many cases, the product information used for individual identification of each product contains information for identifying a business operator that may be a manufacturer or a distributor of the product, and information indicating a classification of the product. Thus, in general, the manufacturer or the distributor of the product writes the product information (prints a code) on a label by itself after it identifies the product to which the label is to be attached. On the other hand, if it becomes necessary to print such product information on the label as a digital watermark, the manufacturer or the distributor of the product is required to introduce a system for digital watermark to be charged with serious burden.

Thus, the present invention is intended to provide a technique allowing traceability of a product to be improved without imposing burden on a manufacturer or a distributor of the product.

### Solution to Problem

A label management system according to the present invention is a system that allows product management using a label, and comprises a code printing device, an information reading device, and a database. The label includes a print surface printed with a digital watermark that shows label information. The label information is information for individual identification of the label itself. The code printing device prints a code of product information on the print surface of the label. The product information is information for individual identification of a product to which the label is to be attached. The information reading device reads the label information and the product information from the digital watermark and the code respectively printed on the print surface of the label, for the label as a unit. The label information and the product information that are read by the information reading device are stored into the database in association with each other for the label as a unit.

A label management method according to the present invention is a method that allows product management using a label. The label includes a print surface printed with a digital watermark that shows label information. The label information is information for individual identification of the label itself. First, the method prints a code of product information on the print surface of the label. The product information is information for individual identification of a product to which the label is to be attached. Next, the method reads the label information and the product information from the digital watermark and the code respectively printed on the print surface of the label, for the label as a unit, and stores these pieces of information into a database in association with each other.

A program according to the present invention is a program that allows product management using a label. The label includes a print surface printed with a digital watermark that shows label information. The label information is information for individual identification of the label itself. The program causes a controller to perform the following processes. First, the program causes the controller to perform a process of causing a code printing device to print a code of product information on the print surface of the label. The product information is information for individual identification of a product to which the label is to be attached. Next, the program causes the controller to perform a process of causing an information reading device to read the label information and the product information from the digital watermark and the code printed on the print surface of the label, for the label as a unit. The program thereafter causes the controller to perform a process of storing the label information and the product information that are read by the information reading device into a database in association with each other.

According to the above label management system, label management method, or program, even on the occurrence of a dishonest act of cutting out a part where the code used for tracing of a product is printed in the label while leaving a part of the label where the source information about the product (information such as a brand name that upvalues the product) is printed, it is still possible to read the label information from the remaining label and acquire the product information associated with the read label information from the database. In other words, even from the label from which the code is cut out, it is still possible to acquire the product information about a product to which the label is attached. Thus, even if a product suffers the dishonest act made on the label, it is still possible to trace the product (identify a route of distribution) on the basis of the product information.

Furthermore, it is possible for a manufacturer or a distributor of a product to use the label on which the digital watermark is printed in a different system or place (such as a label manufacturer). This eliminates a need for the manufacturer or the distributor of the product to introduce a system for digital watermarking in preparation for introduction of the above label management system, so that burden is unlikely to be imposed on the manufacturer or the distributor of the product.

In the above label management system, label management method, or program, the label information may be printed as the digital watermark at least in a region of the print surface of the label where source information about the product to which the label is to be attached is printed. In this configuration, the digital watermark is printed in a region highly likely to be left in the label even on the occurrence of a dishonest act of cutting out a part where the code used for tracing of the product is printed in the label. Thus, even on the occurrence of such a dishonest act, it is still possible to leave the digital watermark in a readable state in the label.

### Advantageous Effects of Invention

According to the present invention, it is possible to improve traceability of a product without imposing burden on a manufacturer or a distributor of the product.

### Brief Description of Drawings

FIG. 1A is a conceptual view showing a label management system according to an embodiment, and FIG. 1B is a block diagram showing the configuration of the label management system.
FIGS. 2A to 2C are conceptual views showing three examples of a label used for product management.
FIG. 3A is a conceptual view showing a band-like sheet and two or more labels aligned in a peelable state on the band-like sheet, and FIG. 3B is a conceptual view showing a state where digital watermarks are printed on the labels on the band-like sheet.
FIG. 4 is a flowchart showing control processing performed in the label management system.

### Description of Embodiments

### [1] Configuration of Label Management System

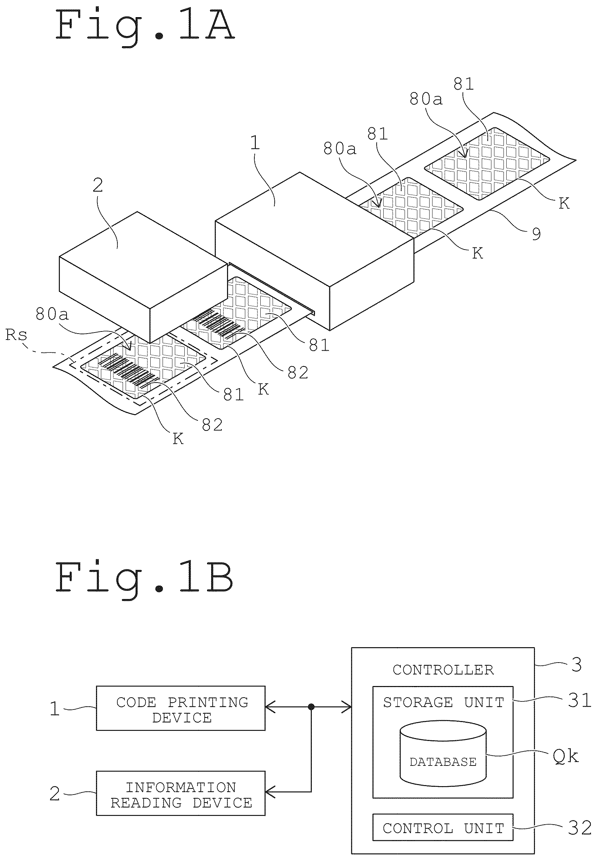

FIG. 1A is a conceptual view showing a label management system according to an embodiment, and FIG. 1B is a block diagram showing the configuration of the label management system. The label management system according to the present embodiment is a system that allows product management using a label K, and includes a code printing device 1, an information reading device 2, and a controller 3.

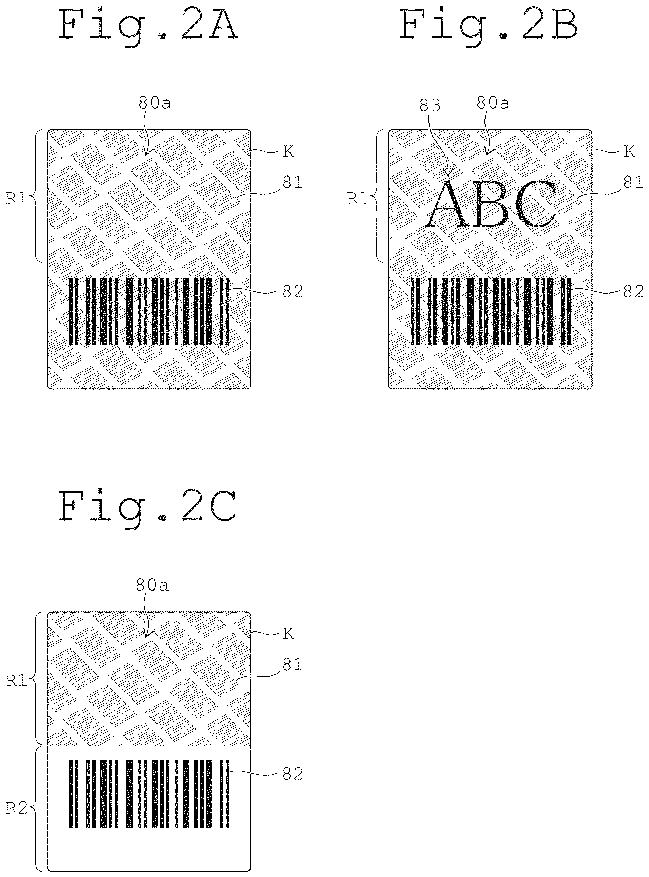

FIG. 2A is a conceptual view showing an example of the label K used for product management. As shown in this drawing, the label K has a print surface 80a printed with a digital watermark 81 and a code 82 (such as a bar code or a QR code^{®}). In the present embodiment, the digital watermark 81 is printed on the print surface 80a of the label K by a system (a system for digital watermarking not shown in the drawings) different from the label management system. On the other hand, the code 82 is printed later by the label management system on the print surface 80a of the label K where the digital watermark 81 has been printed.

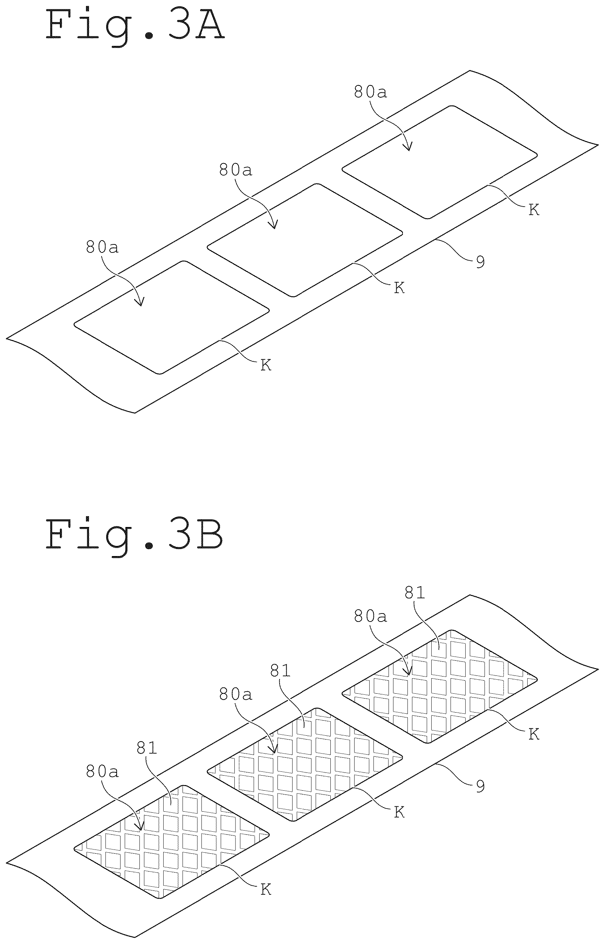

As an example, the label K is a seal having an adhesive surface as a surface opposite to the print surface 80a. In this case, in order to allow two or more labels K to be printed efficiently, the labels K aligned in a peelable state on a band-like sheet 9 (more specifically, an elongated sheet having a surface coated with a release agent) can be used during the printing (see FIG. 3A). For printing the digital watermark 81, the digital watermarks 81 can be printed sequentially on the labels K on the band-like sheet 9 while the band-like sheet 9 wound in a roll shape is unwound in the system for digital watermarking (see FIG. 3B), and then a part of the band-like sheet 9 where printing of the digital watermarks 81 on the labels K is finished can be wound again into a roll shape. For printing the code 82, the codes 82 can be printed sequentially on the labels K on the band-like sheet 9 while the band-like sheet 9 wound in a roll shape is unwound again in the label management system (see FIG. 1A).

In the present embodiment, in addition to allowing product management using the code 82, the label management system allows product management using the digital watermark 81 printed by the different system (system for digital watermarking) before printing of the code 82. The configuration of the label K and the configuration of each device of the label management system will be described below in detail.

### [1-1] Label

### <Digital Watermark>

In the present embodiment, the digital watermark 81 is a mark embedded imperceptibly in the print surface 80a (see FIG. 2A) and shows label information that is information for individual identification of the label K itself (identification from a different label K). Here, the label information is simple information such as a number differing between the labels K, and is simply required to include minimum possible information for individual identification of the label K itself. In other words, the label information is not required to include information about a product to which the label K is to be attached (such as product information allowing tracing of the product).

### <Code>

In the present embodiment, the code 82 is a code formed by writing product information on the print surface 80a in the form of a one-dimensional code (such as a bar code) or a two-dimensional code (such as a QR code^{®}). The product information is information for individual identification of a product to which the label K is to be attached. The product information mentioned herein is a line of numbers, alphabets, or symbols arranged one-dimensionally such as a GTIN, and includes a number for identifying a manufacturer or a distributor (such as a business operator) of the product or a number indicating a classification of the product in order to allow the product to be identified individually. The example in FIG. 2A shows a case where the product information is written in the form of a bar code. Such product information allows tracing of the product (identification of a route of distribution) by reading the product information from the code 82 during the course of the distribution.

### <Source Information>

The print surface 80a of the label K may be printed with source information 83 about a product to which the label K is to be attached in addition to the digital watermark 81 and the code 82 (see FIG. 2B). The source information 83 mentioned herein has the function of upvaluing the product by clearly showing a source of the product such as a brand name. The example in FIG. 2B shows a case where "ABC" is written as the source information 83.

### <Print Region>

A dishonest act such as diversion of a product is made by cutting out a part where the code 82 used for tracing of the product is printed in the label K while leaving a part of the label K where the source information 83 about the product (information such as a brand name that upvalues the product) is printed, for the purpose of escaping from the tracing of the product while using the value of the product badly.

In response to this, in the present embodiment, in order to allow the label information to be read without fail from the remaining label K even on the occurrence of such a dishonest act, the digital watermark 81 is printed at least in a region where the source information 83 is printed. In this configuration, the digital watermark 81 is printed in a region highly likely to be left in the label K even on the occurrence of the above dishonest act. Thus, even on the occurrence of the above dishonest act, it is still possible to leave the digital watermark 81 in a readable state in the label K.

As an example, with a region where the source information 83 is printed defined as a first print region R1, the digital watermark 81 is printed at least in the first print region R1 by a method called background watermarking which embeds information in a background (base) of the source information 83. The example in FIG. 2A shows a case where the digital watermarks 81 are printed using the background watermarking in an entire region of the print surface 80a including the first print region R1. The example in FIG. 2B shows a case where the source information 83 is printed in the first print region R1.

As another example, if a region in the print surface 80a to become the first print region R1 is determined at a phase of printing the digital watermark 81, the digital watermark 81 may be printed using the background watermarking only on the first print region R1, as shown in FIG. 2C. With a region where the code 82 is printed defined as a second print region R2, if a region in the print surface 80a to become the second print region R2 is determined, a region in the print surface 80a except the second print region R2 can be determined to be a region (first print region R1) where the source information 83 is printed.

When the digital watermark 81 is intended to be printed using the background watermarking in this way, the digital watermark 81 is printed in such a manner as to become readable without fail even if the source information 83 is printed thereafter. More specifically, two or more digital watermarks 81 showing the same label information are printed using the background watermarking (see FIG. 2A). By doing so, even if the source information 83 is printed thereafter (see FIG. 2B), any one of these digital watermarks 81 is easily kept in a readable state without being affected by the source information 83.

In the described label K where the digital watermarks 81 are printed in the entire region of the print surface 80a (see FIG. 2A), independently of a position where the code 82 or the source information 83 is printed on the print surface 80a after printing of the digital watermarks 81, the state of the label K is such that the digital watermark 81 is printed in a required region responsive to the print position of the code 82 or the source information 83 (a print region of the source information 83, or a region except a print region of the code 82). In other words, it is unnecessary to determine a region in advance to become the first print region R1 or the second print region R2 in the print surface 80a. This allows a manufacturer or a distributor of a product to freely determine a print position or a print region of the code 82 or the source information 83.

The digital watermark 81 may be printed together with the source information 83 in the system for digital watermarking. In this case, instead of the background watermarking, a method called font watermarking which embeds information in a character, a figure or the like representing the source information 83 may be used for printing the digital watermark 81.

### [1-2] Code Printing Device

The code printing device 1 is a device that prints the above code 82 on the print surface 80a of the label K (see FIGS. 1A and 1B). In the present embodiment, one code 82 corresponding to one label K is transmitted from the controller 3 to the code printing device 1. Then, the code printing device 1 prints the code 82 received from the controller 3 on the print surface 80a of the label K (in the present embodiment, the label K printed with the digital watermark 81).

If two or more labels K are seals and they are aligned in a peelable state on the band-like sheet 9 as described above (see FIG. 1A), while unwinding the band-like sheet 9 wound in a roll shape, the label management system can cause the code printing device 1 to print the codes 82 sequentially on the labels K (the labels K printed with the digital watermarks 81) on the band-like sheet 9.

### [1-3] Information Reading Device

The information reading device 2 is a device (such as a scanner) that reads the label information and the product information K from the digital watermark 81 and the code 82 respectively printed on the print surface 80a of the label K, for the label K as a unit (see FIGS. 1A and 1B). As an example, the information reading device 2 is composed of one scanner capable of reading the label information and the product information by scanning the digital watermark 81 and the code 82 simultaneously. FIG. 1A shows a scan region Rs indicated by alternate long and short dashed lines used for causing such a scanner to scan the digital watermark 81 and the code 82 simultaneously. As another example, the information reading device 2 may include a scanner for reading the label information from the digital watermark 81 and a scanner for reading the product information from the code 82.

If two or more labels K are seals and they are aligned in a peelable state on the band-like sheet 9 as described above (see FIG. 1A), while unwinding the band-like sheet 9 wound in a roll shape, the label management system can cause the information reading device 2 to sequentially scan the labels K on the band-like sheet 9 (the labels K each printed with both the digital watermark 81 and the code 82) after printing of the code 82 by the code printing device 1, thereby allowing the label information and the product information to be read from each of these labels K.

### [1-4] Controller

The controller 3 is a device responsible for control over the label management system (control over the code printing device 1, the information reading device 2, and others), and includes a storage unit 31 and a control unit 32 (see FIG. 1B).

The storage unit 31 is a unit where information necessary for control over the label management system is saved, and is composed of a storage device such as a ROM or a RAM. In the present embodiment, a database Qk allowing information management for the label K as a unit is constructed in the storage unit 31. The label information and the product information that are read by the information reading device 2 are stored into the database Qk in association with each other for the label K as a unit.

The control unit 32 is a unit that performs control over the label management system, and is composed of a processing device such as a CPU. In the present embodiment, the control unit 32 stores the label information and the product information that are read by the information reading device 2 for the label K as a unit into the database Qk, thereby saving one-to-one association between these pieces of information in the database Qk. In this way, the label information and the product information that are read by the information reading device 2 are stored into the database Qk in association with each other for the label K as a unit.

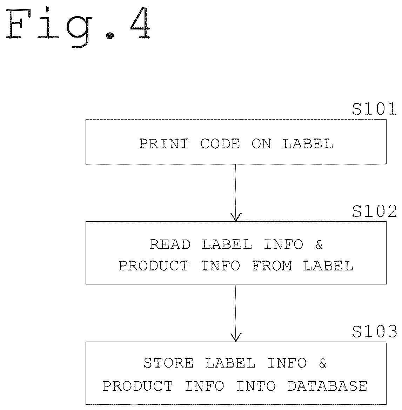

More specifically, the control unit 32 performs control processing as follows in the label management system. The control processing includes the above information management for the label K as a unit using the database Qk. FIG. 4 is a flowchart showing the control processing performed in the label management system. In the present embodiment, the control processing is performed for the label K as a unit. In other words, the control processing is repeated a number of times corresponding to the number of the labels K.

First, the control unit 32 controls the code printing device 1 to cause the code printing device 1 to print the code 82 on the print surface 80a of the label K (in the present embodiment, the label K printed with the digital watermark 81) (step S101).

Next, the control unit 32 controls the information reading device 2 to cause the information reading device 2 to read the label information and the product information from the digital watermark 81 and the code 82 printed on the print surface 80a of the label K (step S102).

The control unit 32 thereafter stores the label information and the product information that are read by the information reading device 2 into the database Qk, thereby saving one-to-one association between these pieces of information in the database Qk (step S103).

As an example, if two or more labels K are seals and they are aligned in a peelable state on the band-like sheet 9 as described above (see FIG. 1A), while controlling the rotation of the band-like sheet 9 wound in a roll shape to unwind the band-like sheet 9, the control unit 32 causes the code printing device 1 to print the code 82 on each of the labels K on the band-like sheet 9 in step S101. In step S102, the control unit 32 causes the information reading device 2 to scan each of the labels K printed with the code 82, thereby causing the information reading device 2 to read the label information and the product information from each of the labels K. In step S103, the control unit 32 saves one-to-one association between the label information and the product information that are read by the information reading device 2 into the database Qk for the label K as a unit.

The described control processing is performed by a processor (not shown in the drawings) constructed in the control unit 32 of the controller 3. In the present embodiment, this processor is configured in the form of software by causing the control unit 32 to execute a program. This program may be saved in a readable state in a portable storage medium (a flash memory, for example), may be read from the storage medium and installed, and then may be saved into the storage unit 31 of the controller 3. Alternatively, this program may be saved in a downloadable state in another server, for example, may be downloaded from the server and installed, and then may be saved into the storage unit 31. The above processor may be configured in the form of hardware by constructing a circuit in the controller 3.

A method allowing product management using the label K (label management method) is constructed by a flow of the sequential processes realized by implementation of the above control processing in the label management system that includes printing of the code 82 on the label K, reading of the label information and the product information from the label K, and storing of the read label information and product information into the database Qk.

According to the above label management system, even on the occurrence of a dishonest act of cutting out a part where the code 82 used for tracing of a product is printed in the label K while leaving a part of the label K where the source information 83 about the product (information such as a brand name that upvalues the product) is printed, it is still possible to read the label information from the remaining label K and acquire the product information associated with the read label information from the database Qk. In other words, even from the label K from which the code 82 is cut out, it is still possible to acquire the product information about a product to which the label K is attached. Thus, even if a product suffers the dishonest act made on the label K, it is still possible to trace the product (identify a route of distribution) on the basis of the product information.

Furthermore, it is possible for a manufacturer or a distributor of a product to use the label K on which the digital watermark 81 is printed in a different system or place (such as a label manufacturer). This eliminates a need for the manufacturer or the distributor of the product to introduce a system for digital watermarking in preparation for introduction of the above label management system, so that burden is unlikely to be imposed on the manufacturer or the distributor of the product.

As a result, according to the above label management system, it is possible to improve traceability of a product without imposing burden on a manufacturer or a distributor of the product.

The above explanations of the embodiments are nothing more than illustrative in any respect, nor should be thought of as restrictive. The scope of the present invention is indicated by claims rather than the above embodiments. Furthermore, it is intended that all changes that are equivalent to a claim in the sense and realm of the doctrine of equivalence be included within the scope of the present invention.

For example, the above label management method may be implemented using means different from the label management system.

### Reference Signs List

1 Code printing device
2 Information reading device
3 Controller
9 Band-like sheet
K Label
31 Storage unit
32 Control unit
80a Print surface
81 Digital watermark
82 Code
83 Source information
Qk Database
R 1 First print region
R2 Second print region
Rs Scan region

## Claims

1. A label management system that allows product management using a label,
the label including a print surface printed with a digital watermark that shows label information, the label information being information for individual identification of the label itself,
the label management system comprising:
a code printing device that prints a code of product information on the print surface of the label, the product information being information for individual identification of a product to which the label is to be attached;
an information reading device that reads the label information and the product information from the digital watermark and the code respectively printed on the print surface of the label, for the label as a unit; and
a database into which the label information and the product information that are read by the information reading device are stored in association with each other for the label as a unit.

2. The label management system according to claim 1, wherein
the label information is printed as the digital watermark at least in a region of the print surface of the label where source information about the product to which the label is to be attached is printed.

3. A label management method that allows product management using a label,
the label including a print surface printed with a digital watermark that shows label information, the label information being information for individual identification of the label itself,
the label management method comprising:
printing a code of product information on the print surface of the label, the product information being information for individual identification of a product to which the label is to be attached; and
reading the label information and the product information from the digital watermark and the code respectively printed on the print surface of the label, for the label as a unit, and storing these pieces of information into a database in association with each other.

4. A program that allows product management using a label,
the label including a print surface printed with a digital watermark that shows label information, the label information being information for individual identification of the label itself,
the program causing a controller to perform:
a process of causing a code printing device to print a code of product information on the print surface of the label, the product information being information for individual identification of a product to which the label is to be attached;
a process of causing an information reading device to read the label information and the product information from the digital watermark and the code printed on the print surface of the label, for the label as a unit; and
a process of storing the label information and the product information that are read by the information reading device into a database in association with each other.
